# EUROPÄISCHE PATENTSCHRIFT

(11) **EP 2 474 796 B1**
(45) Veröffentlichungstag und Bekanntmachung des Hinweises auf die Patenterteilung: **06.03.2013**
(21) Anmeldenummer: 11009788.8
(22) Anmeldetag: 12.12.2011
(51) Int. Cl.: F24J 2/52, H01L 31/048

(54) **Dachhaken, insbesondere für Tragkonstruktionen**
Ceiling hook, in particular for support structures
Crochets de toit, notamment pour structures portantes

(30) Priorität: 10.12.2010 DE 102010054175
(43) Veröffentlichungstag der Anmeldung: 11.07.2012
(73) Patentinhaber: Würth Solar GmbH & Co. KG, 74523 Schwäbisch Hall (DE)
(72) Erfinder: Belschner, Werner, 74544 Michelbach a.d. Bilz (DE); Hanselmann, Timo, 74575 Schrozberg (DE)
(74) Vertreter: Schatt, Markus F.

(56) Entgegenhaltungen:
- EP-A1- 2 194 335
- DE-A1-102005 058 065
- DE-U1-202008 016 000
- DE-U1-202009 003 745
- DE-U1-202010 001 175

## Beschreibung

Die Erfindung betrifft allgemein Dachhaken, insbesondere Dachhaken zur Befestigung von Funktionselementen, insbesondere Kollektorelementen, auf einem Dach.

Die Erfindung betrifft im Besonderen Dachhaken mit variablem Höhenausgleich, die zumindest mehrteilig aufgebaut sind und zumindest ein Fußteil und ein Hakenteil aufweisen.

Derartige Dachhaken oder Dachanker dienen zum Abtragen der Last von über der Dachdeckung angeordneten Konstruktions- oder Funktionselementen in eine Dachunterkonstruktion. Die hier vorwiegend interessierenden Funktionselemente sind zumeist plattenförmig und können z. B. Kollektorelemente wie Thermogeneratorelemente, thermische Sonnenkollektoren, Photovoltaikmodule oder Ähnliches sein. Plattenförmig bedeutet hier, dass es sich um flächige Elemente handelt, deren Tiefen- und Breitenabmessungen deutlich größer sind als die Höhe bzw. Dicke der Elemente.

Bei der Montage solcher Funktionselemente auf einem Dach, werden bekannte Dachhaken üblicherweise durch die Dachdeckung (z.B. Dachpfannen) geführt und darunter mit einer Unterkonstruktion, zumeist den Sparren, des Daches mittels Halteschrauben und/oder Formschluss verbunden. Die Funktionselemente können dann auf oder an einer Tragkonstruktion oder auch direkt an den Dachhaken befestigt werden.

Zur Veranschaulichung sei auf die Figur 1 in der DE 102 13 902 A1 verwiesen, aus der auch bekannt ist, den Dachhaken mehrteilig auszuführen, nämlich mit einem Fußteil zur Verbindung mit der Dachunterkonstruktion und mit dem eigentlichen Hakenteil. Das Hakenteil wird durch die Dachdeckung geführt und mit dem Fußteil einerseits und der Tragkonstruktion für die oder direkt mit den Funktionselementen andererseits verbunden. Dabei können Fußteil und Hakenteil miteinander starr, z. B. mittels Materialschluss, oder lösbar, z. B. mittels einer Schraubverbindung, verbunden sein. DE 20 2005 004 348 U1 zeigt eine formschlüssige Verbindung zwischen Fußteil und Hakenteil, wobei beim Herstellen dieser Verbindung der Hakenteil in den Fußteil eingehängt wird. Dadurch wird kein zusätzliches sicherndes Verbindungselement benötigt und es besteht eine gewisse Freiheit in der seitlichen Anordnung des Hakenteils gegenüber dem Fußteil parallel zur Befestigungsebene für einen Seitenausgleich.

DE 20 2005 009 937 U1 beschreibt grundsätzliche Verstellmöglichkeiten an Dachhaken für eine Höheneinstellung der Montageschnittstelle des Dachhakens zu dem Funktionselement bzw. der Tragkonstruktion hierfür. Die Höheneinstellung kann u.a. an der Verbindung zwischen Fußteil und Hakenteil vorgesehen werden. Alternativ oder zusätzlich kann das Hakenteil selbst zweigeteilt ausgeführt werden, um eine ggf. zusätzliche Höheneinstellung bei der Montage der Hakenteile vornehmen zu können.

DE 20 2008 016 000 U1 offenbart einen geteilt ausgebildeter Dachhaken mit einem Fußteil zur Herstellung einer Verbindung mit einer Dachunterkonstruktion und ein mit dem Fußteil verbindbares Hakenteil, das am anderen Ende über einen Anschluss für die Befestigung eines über der Dachhaut befindlichen Traggerüstes oder einer Baueinheit verfügt. Das Fußteil ist ein abgelängter Abschnitt eines Winkelprofils, dessen einer Winkelschenkel über Anschlüsse zur Herstellung der Verbindung mit der Dachunterkonstruktion verfügt, wobei die Anschlüsse beabstandet vom anderen Winkelschenkel angeordnet sind. Zwischen den beiden Winkelschenkeln ist winkelinnenseitig eine in Profillängsrichtung durchgängige Profilwand vorgesehen, die mit dem Winkelschenkelbereich der Anschlüsse einen stumpfen Winkel einschließt. Die Profilwand dient als Auflagefläche für das Ende des Hakenteils und ist mit dem Ende des Hakenteils verbindbar. Das Fußteil kann aus einem stranggepressten Aluminiumprofil durch Ablängen hergestellt warden.

Die Aufgabe der vorliegenden Erfindung ist, einen geteilt ausgebildeten Dachhaken bereitzustellen, der aus Leichtmetall, insbesondere Aluminium oder einer Aluminiumlegierung, herstellbar ist und derart ausgeführt ist, dass die Verbindung zwischen dem Fußteil und dem Hakenteil hinsichtlich eines Abstands zwischen diesen einstellbar ist und dabei eine optimierte Leichtbau-Konstruktion des Dachhakens möglich ist.

Diese Aufgabe wird mit den Merkmalen der unabhängigen Ansprüche gelöst. Weitere Ausführungsformen bzw. vorteilhafte Weiterbildungen sind in den auf diese rückbezogenen Unteransprüchen angegeben.

Durch den erfindungsgemäßen Dachhaken wird ein Dachhaken sowohl mit einer stabilen Leichtbau-Konstruktion als auch mit einer höhenverstellbaren Verbindung zwischen dem Fußteil und dem Hakenteil bereitgestellt. Die erfindungsgemäße stabile Leichtbau-Konstruktion besteht darin, dass bei der Einleitung von Zug und/oder Druck vom Hakenteil in den Fußteil der Anschlusspunkt des Hakenteils an den Fußteil gleichmäßig belastet wird. Dadurch stellt der erfindungsgemäße Dachhaken eine einstellbare Verbindung zwischen dem Fußteil und dem Hakenteil bereit, die nicht zu Lasten der Statik geht.

Ein erfindungsgemäßer Dachhaken oder eine erfindungsgemäße Dachhaken-Vorrichtung ist aus einem Fußteil zur Verbindung mit einer Dachunterkonstruktion und einem mit dem Fußteil zusammenfügbaren Hakenteil gebildet, das an seinem ersten Ende über einen Anschluss zur Befestigung einer über der Dacheindeckung befindlichen Tragkonstruktion oder einem Funktionselement verfügt.

Der Anschluss am ersten Ende ist bevorzugt als Durchgangsbohrung im Hakenteil und besonders bevorzugt als Langloch ausgebildet. Es ist aber auch möglich am ersten Ende ein festes Verbindungselemente, wie beispielsweise einen Gewindebolzen vorzusehen.

Das Hakenteil ist bevorzugt so geformt, dass das erste Ende des Hakenteils, das als Montageanschluss für Konstruktions- oder Funktionselemente dient, bei hergestellter Verbindung zwischen Fußteil und Hakenteil im Wesentlichen senkrecht zum ersten Winkelschenkel angeordnet ist.

Das Fußteil ist als Winkelprofil mit einem ersten Winkelschenkel und einem zweiten Winkelschenkel ausgeführt. Der zweite Winkelschenkel ist insbesondere senkrecht oder innerhalb eines Winkelbereichs zwsichen 0 Grad und 15 Grad zum ersten Winkelschenkel orientiert und auf diesem angeordnet und weist -im Profilquerschnitt gesehen - an einer Schenkelvorderseite und einer Schenkelrückseite jeweilige Schenkelprofilflächen in Form von abwechselnd zueinander angeordneten und sich in der Profil-Längsrichtung erstreckenden Nuten und Auskragungen oder Erhebungen von einem Grundkörper des zweite Winkelschenkels auf. Die Struktur der Profilflächen wird von regelmäßig strukturierten Profilelementen, die parallel zur Profil-Längsrichtung verlaufen, gebildet und wirkt mit einer komplementär zu dieser geformten Struktur der einander gegenüber liegenden Innenflächen eines gabelförmig gebildeten zweiten Endes des Hakenteils zusammen.

Der Hakenteil ist an seinem zweiten Ende gegabelt ausgebildet, d.h. weist einen ersten und einen zweiten Gabelschenkel auf, die jeweils eine komplementär zur Struktur jeweiliger Profilflächen des zweiten Winkelschenkels geformte Gabelinnenfläche aufweisen, wobei die zwei Gabelinnenflächen einander zugewandt sind und sich gegenüberliegen. Die beiden Gabelinnenflächen haben zu den Schenkelprofilflächen komplementär geformte bzw. profilierte Gabelprofilflächen, d.h. diese wirken insbesondere formschlüssig zusammen.

Aufgrund der komplementären Profilflächen kann das Hakenteil in wenigstens zwei verschiedenen Abständen bzw. Höhenstufen zum ersten Winkelschenkel mit dem zweiten Winkelschenkel an diesem in Profil-Längsrichtung verschiebbar zusammengefügt werden.

Eine Ausführungsform des erfindungsgemäßen Dachhakens kann somit in verschiedenen Höhenstufen für einen Höhenausgleich und seitlich verschiebbar für einen Seitenausgleich auf einem Dach montiert werden. Die erfindungsgemäße Verbindung zwischen dem Fußteil und dem Hakenteil ermöglicht einen stabilen und kosteneffizienten Dachhaken aus Aluminium oder einer Aluminiumlegierung zu fertigen, welcher eine hohe Variabilität hinsichtlich seiner Anwendung bietet.

Bei einer Ausführungsform der Erfindung sind die profilierten Schenkelaußenflächen bzw. Schenkelprofilflächen und die profilierten Gabelinnenflächen bzw. Gabelprofilflächen jeweils aus mehreren in Profil-Längsrichtung verlaufenden, gleichen sowie gleichmäßig beabstandeten Nuten und schienenförmigen Auskragungen oder schienenförmigen Erhebungen oder Federn gebildet. Die Nuten und Federn sind im Querschnitt jeweils komplementär zueinander ausgebildet. In einer konkreten Ausführung sind die Nuten bzw. Federn mit rechteckigem Querschnitt ausgebildet.

Für die Sicherung bzw. Fixierung der Verbindung zwischen dem Hakenteil und dem Fußteil können zwei Möglichkeiten alternativ vorgesehen werden.

Als eine erste Möglichkeit können im zweiten Winkelschenkel des Fußteils in gleichmäßigen Abständen zueinander und gleichem Abstand zum ersten Winkelschenkel Bohrungen, bevorzugt Gewindebohrungen, vorgesehen sein. Im zweiten Ende des Hakenteils sind dann entsprechend der Anzahl der Höhenstufen Bohrungen oder alternativ ein Langloch so vorgesehen, dass zur Sicherung bzw. Fixierung eine Schraube durch eine der Bohrungen bzw. das Langloch im zweiten Endes des Hakenteils so geführt werden kann, dass die Schraube in eine der Bohrungen im zweiten Winkelschenkel eingreifen kann. Mittels der Schraube kann das zweite Ende mit dem zweiten Winkelschenkel verspannt und damit fixiert werden.

Diese Ausführungsform des erfindungsgemäßen Dachhakens gewährleistet eine hohe Stabilität des Querschnitts des zweiten Winkelschenkels, ermöglicht aber eine seitliche Einstellbarkeit des Hakenteils gegenüber dem Fußteil nur in Stufen gemäße dem Abstand der (Gewinde-)Bohrungen.

Bei einer zweiten Möglichkeit ist im zweiten Winkelschenkel des Fußteils eine Verbindungslängsnut in Profillängsrichtung mit nach innen kragenden Nutkanten vorgesehen, die parallel zum ersten Winkelschenkel verläuft. Im zweiten Ende des Hakenteils sind wiederum entsprechend der Höhenstufenanzahl Bohrung, bevorzugt Gewindebohrungen, oder ein Langloch vorzusehen. Damit kann eine Schraubverbindung zwischen einem in der Längsnut geführten und gelagerten ersten Formteil als Nutenstein beispielsweise in Form einer Schraubenmutter, und einem durch die entsprechende Bohrung oder das Langloch geführten zweiten Formteil, beispielsweise eine Schraube, unter Verspannung des zweiten Endes mit dem zweiten Winkelschenkel hergestellt werden.

Diese Ausführungsform des erfindungsgemäßen Dachhakens nutzt auch die hohe Stabilität des vorgeschlagenen Querschnittes und bietet zusätzlich eine stufenlose Verstellmöglichkeit parallel zur Befestigungsebene des Fußteils. Eine Reduzierung der Belastbarkeit durch die Verbindungslängsnut im zweiten Winkelschenkel kann durch eine entsprechende Dimensionierung der Stärke des zweiten Winkelschenkels ausgeglichen werden.

Im Ergebnis basiert die Verbindung zwischen dem Fußteil und dem Hakenteil im zusammengefügten Zustand (Montagezustand) sowohl auf Kraftschluss (durch die Verspannung mittels erstem und zweiten Formteil) als auch auf Formschluss (zwischen den komplementären Profilflächen).

Beide Ausführungen des Fußteils und ggf. auch des Hakenteils können aus einem stranggepressten Leichtmetallprofil, insbesondere Aluminiumprofil, durch Ablängen hergestellt werden, was fertigungstechnisch optimal ist.

Um in Einbaulage ein Aufsetzen des Hakenteils auf der Dachdeckung zu verhindern, kann vorgesehen werden, dass der in der Dachdeckung geführte Abschnitt des Hakenteils mit der Längsrichtung des ersten Endes des Hakenteils einen stumpfen Winkel einschließt, wobei dieser Winkel bevorzugt in etwa 95° bis 105° beträgt.

Der erste Winkelschenkel als Montageplatte besitzt bevorzugt eine ebene Montagefläche als Auflagefläche für den Kontakt mit der Dachunterkonstruktion. Zur Herstellung einer Verbindung mit der Dachunterkonstruktion kann der erste Winkelschenkel mit Anschlüssen ausgestaltet sein, die beabstandet vom zweiten Winkelschenkel angeordnet sind. Die Anschlüsse können Bohrungen für Befestigungsmittel wie Schrauben oder Nägel an der Dachunterkonstruktion sein und sind bevorzugt in zwei zueinander beabstandeten Reihen parallel zum zweiten Winkelschenkel angeordnet.

Der erste Winkelschenkel kann in der der Montagefläche gegenüberliegenden oberen Fläche beabstandet vom zweiten Winkelschenkel in der Schenkelhöhe reduziert sein, was eine weitere Materialeinspaarung bei der Fertigung erlaubt.

Der zweite Winkelschenkel des Fußteils kann zumindest eine in Profillängsrichtung verlaufende Hohlkammer aufweisen, was weitere Materialeinsparungen bei der Fertigung erlaubt.

Grundsätzlich können das Fußteil und das Hakenteil aus einem Leichtmetall, insbesondere Aluminium oder einer Aluminiumlegierung, bestehen und insbesondere durch Ablängen von einem Strangpressprofile hergestellt werden. Dies ist fertigungstechnisch besonders effizient.

Die Länge des Fußteils in Profillängsrichtung ist um einen vorbestimmten Verschiebeweg länger als die Länge des Hakenteils in Profillängsrichtung, insbesondere etwa 2- bis 4-mal, bevorzugt 3-mal so lang. Beispielsweise können das Fußteil 120 mm lang und das Hakenteil 40 mm lang sein.

Weitere vorteilhafte Ausgestaltungen der Erfindung, sowie Ausführungsbeispiele hierzu, werden nachstehend in Verbindung mit den beigefügten Zeichnungsfiguren näher erläutert. Funktionsähnliche Bauteile oder Komponenten sind teilweise mit gleichen Bezugszeichen versehen. Die innerhalb der Beschreibung des Ausführungsbeispiels verwendeten Begriffe "links", "rechts", "oben", "unten" beziehen sich auf die Zeichnungsfiguren in einer Ausrichtung mit normal lesbaren Figurenbezeichnung und Bezugszeichen. Hierbei zeigen:
Fig. 1 eine perspektivische Darstellung von einem bestimmungsgemäß zusammengefügten Fußteil und Hakenteil gemäß einem Ausführungsbeispiel eines Dachhakens der Erfindung;
Fig. 2 den Dachhaken der Fig. 1 in der Schnittansicht A-A aus der Fig. 1; und
Fig. 3a bis 3b jeweils den Dachhaken der Fig. 1 und 2 in drei verschiedenen Höhenstufen zur Veranschaulichung der Einstellbarkeit des erfindungsgemäßen Dachhakens zum Höhenausgleich.

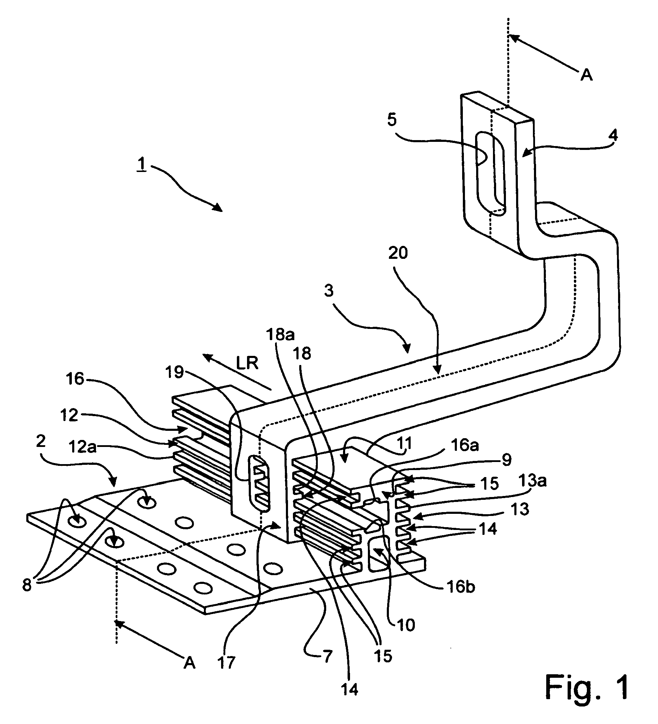

Eine Ausführungsform eines erfindungsgemäßen Dachhakens 1 ist in den Zeichnungen dargestellt. Fig. 1 zeigt hierzu zunächst den Dachhaken 1 in einer perspektivischen Darstellung. Der geteilt ausgebildete Dachhaken 1 besteht aus einem Fußteil 2 zur Herstellung einer Verbindung mit einer Dachunterkonstruktion und ein mit dem Fußteil 2 verbindbaren Hakenteil 3, das an einem ersten Ende 4 über einen Anschluss oder ein Anschlussteil 5 zur Befestigung einer über der Dacheindeckung befindlichen Tragkonstruktion oder eines Tragkonstruktion-Bauteils bzw. eines Funktionselements, wie beispielsweise eines Kollektorelements, verfügt. Das Anschlussteil 5 kann eine Bohrung 5 zur Aufnahme eines Verbindungselements zu diesem Zweck aufweisen und erstreckt sich in einer Anschlussteil-Breitenrichtung B-5.

Derartige hier interessierende Kollektorelemente können Thermogeneratorelemente, thermische Sonnenkollektoren, Photovoltaikmodule oder Ähnliches sein.

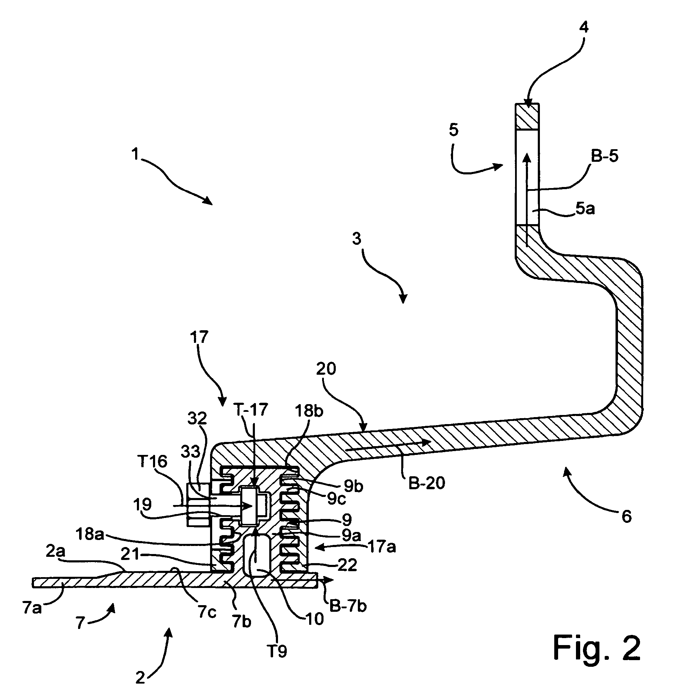

Das Fußteil 2 kann insbesondere ein abgelängter Abschnitt eines Winkelprofils sein, das beispielsweise aus einem Leichtmetall wie Aluminium oder einer Aluminiumlegierung als stranggepresstes Profil hergestellt werden kann. Das Winkelprofil weist im Wesentlichen einen ersten Winkelschenkel 7 als Montageplatte und einen zweiten Winkelschenkel 9 auf. Der erste Winkelschenkel 7 verläuft in einer Winkelschenkel-Längsrichtung L7 und in dem Anschlüsse 8 insbesondere in Form von Bohrungen zur Herstellung der Verbindung mit der Dachunterkonstruktion ausgebildet sind, wobei diese insbesondere in einem in der Winkelschenkel-Längsrichtung L7 erstreckenden Randabschnitt 7a ausgebildet sein können. Dabei ist der erste Winkelschenkel 7 aus einem Außenbereich und einem Basisteil 7 gebildet. Das Basisteil kann insbesondere als ebene sich in der Profil-Längsrichtung LR und der Breitenrichtung B-7b ersteckende ebene Platte ausgebildet sein (Figur 2). Die Anschlüsse 8 sind in der Darstellung der Figur 1 als Bohrungen ausgeführt, die beabstandet in zwei parallelen Reihen zu einem zweiten Winkelschenkel 9 des Winkelprofils angeordnet sind.

Der erste Winkelschenkel 7 ist in der gegenüberliegenden oberen Fläche beabstandet vom zweiten Winkelschenkel 9 in der Schenkelhöhe abgesetzt, d.h. weist im Außenbereich 7a eine geringere Materialstärke auf als im Basisteil 7b, von dem aus im Profilquerschnitt gesehen (Figur 2) sich der zweite Winkelschenkel 9 und der Außenbereich 7a erstreckt. Der Außenbereich 7a kann auf den Basisteil 7b durch einen zwischen diesen gelgenen Übergangsbreich 7c übergehen, der eine von dem Außenbereich aus gesehen zunehmende Dicke hat. Bei einer Ausführungsform des erfindungsgemäßen Dachhakens verläuft eine Reihe der Anschlüsse 8 in der Profil-Längsrichtung LR im abgesetzten Teil und eine weitere Reihe der Anschlüsse 8 in der Profil-Längsrichtung LR im Fußteil.

Der zweite Winkelschenkel 9 weist einen Grundkörper 9a auf, der sich im Profilquerschnitt gesehen in einer Tiefenrichtung T9 erstreckt und an dessen entgegen gesetzt zueinander orientierten Querschnittsaußenseiten zumindest ein Paar oder eine Mehrzahl von Paaren jeweils einer Nut 9b und einer Erhebung 9c geformt sind, die sich jeweils quer zur Tiefenrichtung T9 erstrecken. Der zweite Winkelschenkel 9 ist im Wesentlichen senkrecht an dem ersten Winkelschenkel 7 angeordnet, wobei sich die Tiefenrichtung T9 des Grundkörpers 9a in einem Winkel zu einer sich im Proilquerschnitt des Fußteils 2 erstreckenden Breitenrichtung B-7b desselben erstreckt, der in einem Bereich zwischen 0 Grad und ± 15 Grad und insbesondere 0 Grad verläuft.

Der zweite Winkelschenkel 9 ist im Profilquerschnitt (Figur 2) gesehen in der Länge kürzer als der erste Winkelschenkel und bei der Materialstärke etwa um das Fünffache und insbesondere um einen Faktor zwischen 2,5 und 7 dicker als der erste Winkelschenkel 7. Im unteren Teil, d.h. benachbart zum ersten Winkelschenkel 7, verläuft im Profilquerschnitt (Figur 2) gesehen im zweiten Winkelschenkel 9 eine sich in der Profillängsrichtung LR erstreckende Hohlkammer 10. Durch die Hohlkammer 10 reduziert sich der Materialeinsatz für das Fußteil 2. Die Hohlkammer 10 kann insbesondere, wie es in der Firu 2 dargestellt ist, im Profilquerschnitt (Figur 2) gesehen als Langloch ausgebildet sein, das sich in der Tiefenrichtung T9 erstreckt.

Das dem ersten Winkelschenkel 7 gegenüber liegende freie Ende 11 des zweiten Winkelschenkels 9 ist ebenflächig ausgeführt. Vom freien Ende 11 in Richtung des ersten Winkelschenkels 7 besitzt der zweite Winkelschenkel 9 eine Schenkelvorderseite 12 und eine Schenkelrückseite 13 mit jeweiligen Schenkelprofilfläche 12a bzw. 13a, die im Wesentlichen parallel zueinander verlaufen. Die Profilflächen sind regelmäßig mit in Profil-Längsrichtung LR verlaufenden Profilelementen strukturiert.

Im dargestellten Ausführungsbeispiel sind die Schenkelprofilflächen 12a und 13a jeweils aus mehreren in Profil-Längsrichtung LR verlaufenden, gleichen sowie gleichmäßig beabstandeten Nuten 14 und Federn 15 gebildet. Im Ausführungsbeispiel sind diese Nuten 14 und Federn 15 als Profilstrukturelemente im Querschnitt rechteckig geformt.

Das Hakenteil 3 ist gebildet aus:
■ dem ersten Ende oder Endabschnitt 4, das im Profilquerschnitt des erfindungsgemäßen Dachhakens gesehen (Figur 2) als ebene Platte ausgebildet ist,
■ einem zweiten Ende oder Endabschnitt 17, das sich im Profilquerschnitt des erfindungsgemäßen Dachhakens gesehen (Figur 2) in einer Tiefenrichtung T-17 erstreckt,
■ einem Zwischenabschnitt 6, der zwischen dem ersten Ende 17 und dem zweiten Ende 17 diese verbindend angeordnet ist.

Das zweite Ende 17 des Hakenteils 3 ist gegabelt ausgebildet und weist sich gegenüberliegende Gabelschenkel 21, 22 mit jeweiligen sich gegenüberliegenden Gabelinnenflächen 18 auf. Nach einer Ausführungsform des erfindungsgemäßen Dachhakens ist der Gabelabschnitt 17a des zweiten Endes 17 Profilquerschnitt des erfindungsgemäßen Dachhakens gesehen (Figur 2) symmetrisch zur Tiefenrichtung T-17 ausgebildet. Nach einer Ausführungsform des erfindungsgemäßen Dachhakens verläuft die Tiefenrichtung T-17 in einem Winkel zur der Breitenrichtung B-5 des ersten Endes 5, der in einem Bereich zwischen 0 Grad und ± 45 Grad gelegen ist und insbesondere 0 Grad beträgt. Die sich gegenüberliegenden Gabelinnenflächen 18 verlaufen parallel zueinander und bilden so am zweiten Ende 17 eine maulförmige Öffnung zur Aufnahme des Winkelschenkels 9 und einer formschlüssigen Verbindung mit dem zweiten Winkelschenkel 9.

Die Gabelinnenflächen 18 besitzen zu den Schenkelprofilflächen 12a und 13a der Schenkelvorderseite 12 bzw. Schenkelrückseite 13 komplementär geformte Gabelprofilflächen 18a bzw. 18b, wobei die Schenkelprofilflächen 12a bzw. 13a und die Gabelprofilflächen 18a derart geformt sind, dass das Hakenteil 3 von der Seite in Profillängsrichtung (LR) unter Bildung eines Formschlusses mittels der Profilflächen (12a, 13a, 18a) mit dem Fußteil 2 durch Zusammenschieben bzw. -stecken zusammengefügt werden kann. Die Gabelprofilflächen 18a bzw. 18b können, wie es in dem in der Fiur 2 gezeigten Ausführungsform der Erfindung dargestellt ist, symmetrisch in Bezug auf die Tiefenrichtung T9 ausgebildet sein.

Aufgrund der besonderen regelmäßigen Struktur der Profilflächen (12a, 13a, 18a) ist es möglich, das Hakenteil 3 in wenigstens zweite unterschiedlichen Abständen zum Fußteil 2 mit dem letzteren zusammenzufügen. Somit kann der erfindungsgemäße Dachhaken 1 für einen Höhenausgleich in (Höhen-)Stufen eingestellt werden.

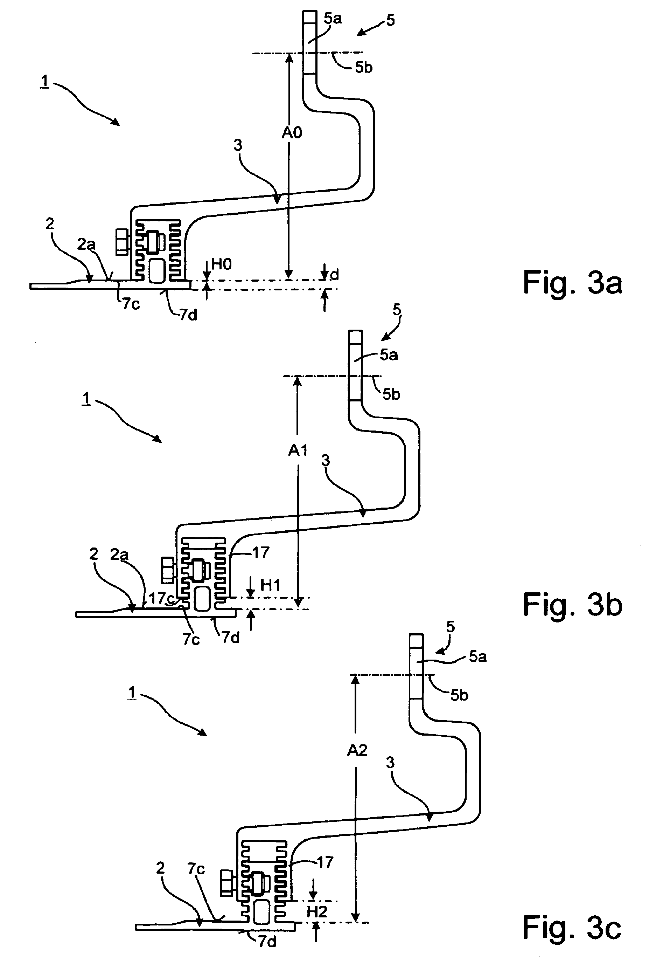

Bei dem in den Zeichnungen gezeigten Ausführungsbeispiel können, wie noch im Zusammenhang mit den Fig. 3a bis 3c erläutert wird, drei verschiedene Höhenstufen eingestellt werden. D.h., das Hakenteil 3 kann in wenigstens drei verschiedenen Abständen H0, H1 und H2 zwischen der dem Ende 17 zugewandten Oberfläche 7c des ersten Winkelschenkels 7 und der dieser zugewandten Endfläche 17c des zweiten Endes 17 mit dem zweiten Winkelschenkel 9 in Profil-Längsrichtung LR verschiebbar zusammengefügt werden.

In der Schenkelvorderseite 12 des zweiten Winkelschenkels 9, die von dem Zwischenabschnitt 6 abgewandt ist, ist eine in der Profillängsrichtung LR und im Profilquerschnitt des erfindungsgemäßen Dachhakens gesehen (Figur 2) in einer Tiefenrichtung T-16 verlaufende Verbindungslängsnut 16 mit nach innen kragenden Nutkanten 16a und 16b vorgesehen. In die Verbindungslängsnut 16 kann, wie in der Schnittansicht A-A der Fig. 2 veranschaulicht, ein erstes Formteil als Nutenstein eingesetzt werden, der in Profillängsrichtung LR in der Verbindungslängsnut 16 verschiebbar geführt ist und sich von Innen an den nach innen kragenden Nutkanten 16a und 16b insbesondere im Profilquerschnitt des erfindungsgemäßen Dachhakens gesehen (Figur 2) quer zur Tiefenrichtung T-16 abstützen kann. Bei der in der Figur 2 dargestellten Ausführungsform des erfindungsgemäßen Dachhakens verläuft die Tiefenrichtung T-9 in einem Winkel von 90 Grad zur Tiefenrichtung T-17 des zweiten Endes 17, der in einem Bereich zwischen 45 Grad und 135 Grad verlaufen kann.

Als Nutenstein oder Formstein kann beispielsweise eine Schraubenmutter 31 (Figur 2) verwendet werden. Die Querschnittsform der Verbindungslängsnut 16 bestimmt sich damit im Wesentlichen durch die Außenkontur des Nutensteins.

Um den Hakenteil 3 in den unterschiedlichen Höhenstufen mit dem Fußteil 2 zusammenfügen zu können ist im zweiten Ende 17 des Hakenteils 2 ein Langloch 19 vorgesehen(siehe Figur 1).

Damit kann, wie in der Schnittansicht A-A der Fig. 2 dargestellt, zwischen einer in der Verbindungslängsnut 16 geführt gelagerten Mutter 31 als Nutenstein und einer durch das Langloch 19 geführten Schraube 32 mit Gewindebolzen 33 als ein zweites Formteil unter Verspannung des zweiten Endes 17 mit dem zweiten Winkelschenkel 9 eine Schraubverbindung hergestellt werden. Zwischen dem Kopf der Schraube 32 und dem Hakenteil 3 kann gegebenenfalls noch eine Unterlegscheibe zur Sicherung der Schraubverbindung vorgesehen werden. Somit ist die Verbindung zwischen dem Fußteil 2 und dem Hakenteil 3 im montierten Zustand sowohl formschlüssig als auch kraftschlüssig.

Grundsätzlich ist es auch möglich die Verbindung zwischen Fußteil 2 und Hakenteil 3 mittels einer Nietverbindung anstelle der Schraube 32 zu sichern. D.h., das erste Formteil ist dann so zu wählen, dass es beispielsweise als Verbindungspartner für eine Popniete anstelle der Schraube 32 fungieren kann.

Bei einer Ausführungsform des erfindungsgemäßen Dachhakens 1 geht ein Abschnitt 20 in das zweite Ende 17 über, der sich insbesondere im Profilquerschnitt des erfindungsgemäßen Dachhakens gesehen (Figur 2) geradlnig in einer Breitenrichtung B-20 erstreckt. Beim Hakenteil 3 ist vorgesehen, dass die Breitenrichtung B-20 des unter der Dachdeckung geführten Abschnitts 20 des S-förmigen Zwischenabschnitts 6 des Hakenteils 3 mit der Tiefenrichtung T9 des zweiten Endes 17 des Hakenteils 3 einen stumpfen Winkel, insbesondere eine Winkel von 95° bis 105°einschließt. Damit wird sichergestellt, dass der Dachhaken 1 in Einbaulage sich nicht auf der Dachdeckung beispielsweise einer Dachschindel oder einer Dachpfanne abstützt.

Das erste Ende 4 des Hakenteils 3, das als Montageanschluss für eine Tragkonstruktion oder ein Funktionselement dient, ist aufgrund der Form des Hakenteils 3 bei hergestellter Verbindung zwischen Fußteil 2 und Hakenteil 3 senkrecht zum ersten Winkelschenkel 7 angeordnet. Der Anschluss 5 ist als Langloch ausgeführt und bietet damit eine weitere Höhenverstellmöglichkeit, die im Zusammenspiel mit den Höhenstufen eine beliebig genaue Einstellung eines benötigten Höhenausgleiches zulässt. Hier sei noch angemerkt, dass die Hakengeometrie im Anschlussbereich des ersten Endes 4 grundsätzlich an einen Befestigungsanschluss eines Kollektorelements bzw. der Tragkonstruktion (Montageschienen) angepasst ausgebildet sein kann.

In den Figuren 3a bis 3c ist der Dachhaken 1 der Figur 1 und der Figur 2 entsprechend des jeweiligen Abstands zwischen der Oberfläche 7c in seinem der Fläche 17c zugewandten Bereich und der Fläche 17c in drei verschiedenen Höhenstufen H0, H1 und H2 zur Veranschaulichung der Einstellbarkeit des erfindungsgemäßen Dachhakens zum Höhenausgleich in einer Seitenansicht dargestellt. Die Höhenstufen H0 bzw. H1 bzw. H2 können je nach der Dicke d des Basisteils 7b auf Höhenstufen zwischen der Unterseite 7d des Bsasisteils 7b und der Fläche 17c umgerechnet werden. Je nach der Höhenstufe ergibt sich zur Einstellung des Dachhakens 1 ein Abstand A0 bzw. A1 bzw. A2 zwischen der Mittelachse 5b der Bohrung 5a und der Oberfläche 7c (Figuren 3a, 3b, 3c).

Die Figur 3a zeigt die niedrigste einstellbare Höhenstufe H0, bei der das Hakenteil 3 mit seinen Gabelprofilflächen 18a in vollständigen Kontakt mit den komplementär hierzu ausgeformten Schenkelprofilflächen 12a und 13a des zweiten Winkelschenkels 9 steht. D.h., alle Federn 15 der Profilflächen greifen jeweils in eine Nut 14 der komplementären Profilfläche des Verbindungspartners.

Die Figur 3b zeigt eine mittlere einstellbare Höhenstufe H1, bei der das Hakenteil 3 mit seinen Gabelprofilflächen 18a nicht mehr in einem vollständigen Kontakt mit den komplementär hierzu ausgeformten Schenkelprofilflächen 12a und 13a des zweiten Winkelschenkels 9 steht. In dieser Stufe sind die Nuten 14 und Federn 15 der Profilflächen gegenüber der in der Fig. 3a gezeigten Zusammenfügung um je eine Feder 15 und eine Nut 14 nach oben versetzt zusammengefügt. Damit erhöht sich die Höhe des Dachhakens 1 um die Summe der Breiten je einer Nut 14 und einer Feder 15. Es ist auch erkennbar, dass die Feinheit der einstellbaren Höhenstufen über das entsprechende Nut- bzw. Federmaß eingerichtet werden kann.

Die Figur 3c zeigt die höchste einstellbare Höhenstufe H2, bei der das Hakenteil 3 mit seinen Gabelprofilflächen 18a im Vergleich zur Höhenstufe der Figur 3b um je eine weiter Feder 15 und eine Nut 15 versetzt mit dem Fußteil 2 zusammengefügt ist. D.h., in dieser Stufe sind die Nuten 14 und Federn 15 der Profilflächen gegenüber der in der Fig. 3a gezeigten Zusammenfügung um zwei Federn 15 und zwei Nuten 14 nach oben versetzt zusammengefügt. Somit hat sich die Höhe des Dachhakens 1 um die Summe der Breiten von zwei Nuten 14 und zwei Federn 15 erhöht.

Es versteht sich, dass die Breiten der Nuten 14 der Breite einer Feder 15 gleichen, damit ein Formschluss überhaupt möglich ist. Selbstverständlich sind bei Beibehaltung des Verbindungsprinzips auch andere Formen der Nuten 14 und Federn 15 möglich.

Neben dem Höhenausgleich mittels der erfindungsgemäßen Höhenstufen ist auch ein stufenloser Seitenausgleich möglich, indem die Länge des Fußteils 2 in Profil-Längsrichtung LR um einen vorbestimmten Verschiebeweg länger als die Länge des Hakenteils 3 in Profil-Längsrichtung LR ist. Im Ausführungsbeispiel beträgt die Länge des Fußteils 2 etwa 120 mm und die Länge des Hakenteils 3 etwa 40 mm, d.h. der Fußteil 2 ist 3-mal länger als der Hakenteil 3, was eine ausreichende Seitenverstellbarkeit ermöglicht.

Der vorstehend beschriebene Dachhaken eignet sich besonders zur Montage von Funktionselementen der Solartechnik auf Dächern. Die Verwendung des Dachhakens ist aber nicht auf diese Anwendung beschränkt. Ebenso können Tragkonstruktionen für andere auf einem Dach zu montierende Bauteile daran befestigt werden, wie beispielsweise Laufstege, Trittleitern, Schneefanggitter oder dergleichen.

## Patentansprüche

1. Dachhaken (1) mit einem Fußteil (2) zur Verbindung mit einer Dachunterkonstruktion und einem mit dem Fußteil (2) verbindbaren Hakenteil (3), das an einem ersten Ende (4) über einen Anschluss (5) für die Befestigung einer über der Dacheindeckung befindlichen Tragkonstruktion oder einem Funktionselement verfügt,
wobei das Fußteil (2) ein Winkelprofil mit einem ersten Winkelschenkel (7) und einem zweiten Winkelschenkel (9) ist,
wobei der zweite Winkelschenkel (9) im Wesentlichen senkrecht zum ersten Winkelschenkel (7) auf diesem angeordnet ist und an einer Schenkelvorderseite (12) und einer Schenkelrückseite (13) jeweilige Schenkelprofilflächen (12a, 13a) aufweist,
wobei der Hakenteil (3) an einem zweiten Ende (17) gegabelt ausgebildet ist und sich gegenüberliegende Gabelinnenflächen (18) aufweist, die zu den Schenkelprofilflächen (12a, 13a) komplementär geformte Gabelprofilflächen (18a) aufweist, sodass das Hakenteil (3) in wenigstens zwei verschiedenen Abständen zum ersten Winkelschenkel (7) mit dem zweiten Winkelschenkel (9)an diesem in Profil-Längsrichtung (LR) verschiebbar zusammengefügt werden kann.

2. Dachhaken nach Anspruch 1, wobei der erste Winkelschenkel (7) Anschlüsse (8) zur Herstellung der Verbindung mit der Dachunterkonstruktion aufweist, wobei die Anschlüsse (8) beabstandet vom zweiten Winkelschenkel (9) angeordnet sind und insbesondere als Bohrungen und/oder Langlöcher für Befestigungsmittel an der Dachunterkonstruktion ausgeführt sind.

3. Dachhaken nach Anspruch 1 oder 2, wobei die Schenkelprofilflächen (12a, 13a) und die Gabelprofilflächen (18a) jeweils aus mehreren in Profil-Längsrichtung (LR) verlaufenden, gleichen sowie gleichmäßig beabstandeten Nuten (14) und Federn (15) gebildet sind, wobei die Nuten (14) und Federn (15) im Querschnitt jeweils komplementär zueinander, insbesondere rechteckig, ausgebildet sind.

4. Dachhaken nach einem der Ansprüche 1 bis 3, wobei zur Fixierung der Verbindung desr zweiten Winkelschenkels (9) des Fußteils (2) in gleichmäßigen Abständen zueinander und gleichem Abstand zum ersten Winkelschenkel (7) Bohrungen vorgesehen sind und das zweite Ende (17) des Hakenteils (3) entsprechend der Anzahl der Höhenstufen Bohrungen oder ein Langloch (19) aufweist, und eine Schraube (32) durch eine der Bohrungen oder das Langloch (19) des zweiten Endes (17) geführt ist, die in eine der Bohrungen des zweiten Winkelschenkels (9) eingreift.

5. Dachhaken nach einem der Ansprüche 1 bis 3, wobei der zweite Winkelschenkel (9) des Fußteils (2) eine Verbindungslängsnut (16) in Profillängsrichtung mit nach innen kragenden Nutkanten (16a, 16b) aufweist und das zweite Ende (17) des Hakenteils (3) entsprechend der Höhenstufenanzahl Bohrungen oder ein Langloch (19) aufweist, sodass eine Schraubverbindung zwischen einem in der Verbindungslängsnut (16) geführt gelagerten ersten Formteil, insbesondere einem Nutenstein (31), und einem durch eine Bohrung oder das Langloch (19) geführten zweiten Formteil, insbesondere eine Schraube (32), unter Verspannung des zweiten Endes (17) mit dem zweiten Winkelschenkel (9) herstellbar ist.

6. Dachhaken nach einem der Ansprüche 1 bis 5, wobei der Anschluss (5) im ersten Ende (4) des Hakenteils (3) als Durchgangsbohrung und bevorzugt als Langloch ausgebildet ist.

7. Dachhaken nach einem der Ansprüche 1 bis 6, wobei der erste Winkelschenkel (7) eine ebene Auflagefläche für die Dachunterkonstruktion aufweist und in der gegenüberliegenden oberen Fläche beabstandet vom zweiten Winkelschenkel (9) in der Schenkelhöhe abgesetzt ist.

8. Dachhaken nach einem der Ansprüche 1 bis 7, wobei das Hakenteil (3) so geformt ist, dass ein Abschnitt des ersten Endes (4) des Hakenteils (3), in dem sich der Anschluss (5) als Montageanschluss befindet, bei hergestellter Verbindung zwischen Fußteil (2) und Hakenteil (3) senkrecht zum ersten Winkelschenkel (7) angeordnet ist.

9. Dachhaken nach einem der Ansprüche 1 bis 8, wobei zumindest der zweite Winkelschenkel (9) des Fußteils (2) zumindest eine in Profil-Längsrichtung (LR) verlaufende Hohlkammer (10) aufweist.

10. Dachhaken nach einem der Ansprüche 1 bis 9, wobei das Fußteil (2) und das Hakenteil (3) aus Leichtmetall, insbesondere Aluminium oder einer Aluminiumlegierung, bestehen und insbesondere als Strangpressprofile ausgeführt sind.

11. Dachhaken nach einem der Ansprüche 1 bis 10, wobei die Länge des Fußteils (2) in Profil-Längsrichtung (LR) um einen vorbestimmten Verschiebeweg länger als die Länge des Hakenteils (3) in Profilrichtung Profil-Längsrichtung (LR) ist, insbesondere etwa 2- bis 4-mal, bevorzugt 3-mal so lang ist.

12. Dachhaken nach einem der Ansprüche 1 bis 11, wobei die Verbindung zwischen dem Fußteil (2) und dem Hakenteil (3) sowohl auf Kraftschluss als auch auf Formschluss basiert.

## Claims

1. A ceiling hook (1) with a base part (2) for connecting to a roof substructure and with a hook part (3) which can be connected to said base part(2), said hook part comprising at a first end (4) a connection (5) for the fastening of a support structure located above the roofing or a functional element,
wherein the base part (2) is an angle profile having a first angle leg (7) and a second angle leg (9),
wherein the second angle leg (9) is arranged on the first angle leg (7) substantially perpendicular thereto and has on a leg front side (12) and a leg rear side (13) in each case a leg profile surface (12a, 13a),
wherein the hook part (3) is bifurcated at a second end (17) and has opposing inner bracket surfaces (18) which have bracket profile surfaces (18a) formed complementary to the leg profile surfaces (12a, 13a) so that the hook part (3), with at least two different spacings from the first angle leg (7), can be jointed to the second angle leg (9) to be displaceable thereon in the longitudinal profile direction (LR).

2. The roof hook according to claim 1, wherein the first angle leg (7) has connections (8) for establishing the connection to the roof substructure, wherein the connections (8) are arranged spaced apart from the second angle leg (9) and are in particular implemented as bores and/or oblong holes for fastening means on the roof substructure.

3. The roof hook according to claim 1 or claim 2, wherein the leg profile surfaces (12a, 13a) and the bracket profile surfaces (18a) are in each case formed from a plurality of identical grooves (14) and tongues (15) which extend in the longitudinal profile direction (LR) and are uniformly spaced apart from each other, wherein the grooves (14) and the tongues (15) are in each case formed complementary to each other in cross-section, and are in particular formed rectangularly.

4. The roof hook according to any one of the claims 1 to 3, wherein holes are provided for fixing the connections of the second angle leg (9) of the base part (2) at uniform spacings to each other and at equal spacing from the first angle leg (7), and the second end (17) of the hook part (3) has bores or an oblong hole (19) corresponding to the number of height steps, and a screw (32) is passed through one of the bores or the oblong hole (19) of the second end (17), which screw engages in one of the bores of the second angle leg (9).

5. The roof hook according to any one of the claims 1 to 3, wherein the second angle leg (9) of the base part (2) has a longitudinal connecting groove (16) in the longitudinal profile direction with inwardly projecting groove edges (16a, 16b), and the second end (17) of the hook part (3) has bores or an oblong hole (19) corresponding to the number of height steps so that a screw connection between a first shaped part, in particular a slot nut (31), mounted in a guided manner in the longitudinal connecting groove (16), and a second shaped part, in particular a screw (32), passed through a bore or the oblong hole (19) can be established thereby tightening the second end (17) to the second angle leg (9).

6. The roof hook according to any one of the claims 1 to 5, wherein the connection (5) in the first end (4) of the hook part (3) is formed as a through-hole and preferably as an oblong hole.

7. The roof hook according to any one of the claims 1 to 6, wherein the first angle leg (7) has a plane support surface for the roof substructure, and on the opposing upper surface, at a spacing from the second angle leg (9), is stepped with regard to the leg height.

8. The roof hook according to any one of the claims 1 to 7, wherein the hook part (3) is formed such that a section of the first end (4) of the hook part (3), in which the connection (5) serving as a mounting connection is located, is arranged perpendicular to the first angle leg (7) when the connection between base part (2) and hook part (3) is established.

9. The roof hook according to any one of the claims 1 to 8, wherein at least the second angle leg (9) of the base part (2) has at least one hollow chamber (10) extending in the longitudinal profile direction (LR).

10. The roof hook according to any one of the claims 1 to 9, wherein the base part (2) and the hook part (3) are made of light metal, in particular of aluminum or an aluminum alloy, and are in particular implemented as extrusion profiles.

11. The roof hook according to any one of the claims 1 to 10, wherein the length of the base part (2) in the longitudinal profile direction (LR) is longer by a predetermined displacement travel than the length of the hook part (3) in the longitudinal profile direction (LR), and is in particular 2- to 4-times, preferably 3-times as long.

12. The roof hook according to any one of the claims 1 to 11, wherein the connection between the base part (2) and the hook part (3) is based on a nonpositive connection as well as a positive connection.

## Revendications

1. Crochet de toit (1) comportant une partie de pied (2) à relier à une ossature porteuse de toit et une partie de crochet (3) reliable à la partie de pied (2), qui dispose à une première extrémité (4) d'un raccord (5) en vue de la fixation d'une construction porteuse se trouvant au-dessus de la couverture du toit ou d'un élément fonctionnel,
dans lequel la partie de pied (2) est une cornière avec un premier pan angulaire (7) et un deuxième pan angulaire (9),
dans lequel le deuxième pan angulaire (9) est disposé essentiellement perpendiculairement au premier pan angulaire (7) sur celui-ci et présente sur un côté avant du pan (12) et un côté arrière du pan (13) des surfaces de profilés de pan (12a, 13a) respectives,
dans lequel la partie de crochet (3) est configurée de manière fourchue à une deuxième extrémité (17) et présente des surfaces intérieures de fourche (18) en vis-à-vis, qui présentent par rapport aux surfaces de profilé de pan (12a, 13a) des surfaces de profilé de fourche (18a) de forme complémentaire, de sorte que la partie de crochet (3) puisse être assemblée dans au moins deux écarts différents par rapport au premier pan angulaire (7) de manière coulissante avec le deuxième pan angulaire (9) sur celui-ci dans la direction longitudinale du profilé (LR).

2. Crochet de toit selon la revendication 1, dans lequel le premier pan angulaire (7) présente des raccords (8) pour produire la liaison avec l'ossature porteuse du toit, dans lequel les raccords (8) sont disposés à un écart du deuxième pan angulaire (9) et notamment sont conçus comme des alésages et/ou des alésages oblongs destinés à des moyens de fixation sur l'ossature porteuse du toit.

3. Crochet de toit selon les revendications 1 ou 2, dans lequel les surfaces de profilés de pan (12a, 13a) et les surfaces de profilé de fourche (18a) sont formés respectivement de plusieurs rainures (14) s'étendant dans la direction longitudinale du profilé (LR), identiques ainsi qu'espacées uniformément et de ressorts (15), dans lequel les rainures (14) et les ressorts (15) sont réalisés en section transversale de manière respectivement complémentaire les uns aux autres, notamment rectangulaire.

4. Crochet de toit selon une des revendications 1 à 3, dans lequel afin de fixer la liaison du deuxième pan angulaire (9) de la partie de pied (2) à des écarts uniformes les uns des autres et à un écart identique du premier pan angulaire (7), des alésages sont prévus et la deuxième extrémité (17) de la partie de crochet (3) présente des alésages correspondant au nombre de degrés de hauteur ou un alésage oblong (19), et une vis (32) est guidée à travers un des alésages ou l'alésage oblong (19) de la deuxième extrémité (17), qui s'engage dans un des alésages du deuxième pan angulaire (9).

5. Crochet de toit selon une des revendications 1 à 3, dans lequel le deuxième pan angulaire (9) de la partie de pied (2) présente une rainure longitudinale de liaison (16) dans la direction longitudinale du profilé avec une arête de rainure (16a, 16b) formant rebord vers l'intérieur et la deuxième extrémité (17) de la partie de crochet (3) présente de manière correspondante au nombre de degrés de hauteur des alésages ou un alésage oblong (19), de telle sorte qu'une liaison par vissage entre un premier élément façonné guidé dans la rainure longitudinale de liaison (16), notamment un écrou (31), et un deuxième élément façonné guidé à travers un alésage ou l'alésage oblong (19), notamment une vis (32) peut être produite en renforçant la deuxième extrémité (17) avec le deuxième pan angulaire (9).

6. Crochet de toit selon une des revendications 14 à 5, dans lequel le raccord (5) est réalisé dans la première extrémité (4) de la partie de crochet (3) comme un alésage traversant et de préférence comme un alésage oblong.

7. Crochet de toit selon une des revendications 1 à 6, dans lequel le premier pan angulaire (7) présente une surface de positionnement plane destinée à l'ossature porteuse du toit et est décalé dans la surface supérieure en vis-à-vis en écart par rapport au deuxième pan angulaire (9) dans la hauteur de pan.

8. Crochet de toit selon une des revendications 1 à 7, dans lequel la partie de crochet (3) est façonnée de telle sorte qu'une portion de la première extrémité (4) de la partie de crochet (3), dans laquelle se trouve le raccord (5) en tant que raccord de montage, soit disposée lorsque la liaison est établie entre la partie de pied (2) et la partie de crochet (3) perpendiculairement au premier pan angulaire (7).

9. Crochet de toit selon une des revendications 1 à 8, dans lequel au moins le deuxième pan angulaire (9) de la partie de pied (2) présente au moins une chambre creuse (10) s'étendant dans la direction longitudinale du profilé (LR).

10. Crochet de toit selon une des revendications 1 à 9, dans lequel la partie de pied (2) et la partie de crochet (3) sont constituées d'un métal léger, notamment un aluminium ou un alliage d'aluminium, et sont notamment conçues comme des profilés extrudés.

11. Crochet de toit selon une des revendications 1 à 10, dans lequel la longueur de la partie de pied (2) dans la direction longitudinale du profilé (LR) est plus longue d'un trajet de déplacement prédéterminé que la longueur de la partie de crochet (3) dans la direction longitudinale du profilé (LR), notamment environ 2 à 4 fois, de préférence 3 fois aussi long.

12. Crochet de toit selon une des revendications 1 à 11, dans lequel la liaison entre la partie de pied (2) et la partie de crochet (3) est basée tant sur la conjonction de force que sur la conjonction de forme.
